# EUROPÄISCHE PATENTSCHRIFT

(11) **EP 2 123 950 B1**
(45) Veröffentlichungstag und Bekanntmachung des Hinweises auf die Patenterteilung: **02.09.2015**
(21) Anmeldenummer: 09005768.8
(22) Anmeldetag: 24.04.2009
(51) Int. Cl.: F16J 15/10, F02F 11/00

(54) **Dichtung für Fluid gefüllte Behälter**
Seal for containers filled with fluid
Joint pour récipients remplis de fluide

(30) Priorität: 20.05.2008 DE 102008024265
(43) Veröffentlichungstag der Anmeldung: 25.11.2009
(73) Patentinhaber: IBS Filtran Kunststoff-/Metallerzeugnisse GmbH, 51597 Morsbach (DE)
(72) Erfinder: Sahm, Dieter, 51580 Reichshof (DE); Biermann, Eberhard, 88214 Ravensburg (DE); Haupt, Josef, 88069 Tettnang (DE)
(74) Vertreter: Kierdorf Ritschel

(56) Entgegenhaltungen:
- EP-A- 1 288 476
- DE-A- 3 815 511
- FR-A- 2 732 741

## Beschreibung

Die Erfindung betrifft einen Fluidbehälter für einen Motor oder ein Getriebe.

Bei der Montage eines mit Fluid befüllbaren Behälters oder eines Deckels wie zum Beispiel einer Zylinderkopfhaube oder einer Ölwanne aus Metall oder Kunststoff werden vorzugsweise Elastomerdichtungen zur Abdichtung der einzelnen Bauteile verwendet. Die Funktion einer solchen Dichtung besteht nicht nur darin, das Fluid gegenüber bestimmten Bereichen abzugrenzen. Zusätzlich sollte eine derartige Dichtung auch einen Spalt überbrücken, der zwischen zu verbindenden Bauteilen auftritt. Ein solcher Spalt kann sich durch unvermeidbare Fertigungstoleranzen, während eines Montagevorganges oder durch eine Verformung aufgrund von thermischen, mechanischen oder anderen Einflüssen während des Einsatzes eines Behälters, eines Deckels oder einer Wanne bilden.

Beim Einsatz von Fluidbehältern ist es unvermeidbar, dass zwischen zu verbindenden Bauteilen eines solchen Fluidbehälters ein Dichtspalt auftritt, der vom Rand des Behälters bis zu Dichtung reicht und eine Höhe von mehr als 0,1 mm besitzt. Dies hat zur Folge, dass aufgrund von Kapillarwirkung in den Dichtspalt ein Medium von außerhalb in den Behälter eindringen kann. Wird ein solcher Dichtspalt visuell überprüft, entsteht der Eindruck, dass die Dichtung defekt ist, obwohl die Dichtung selber eine zuverlässige Abdichtung zwischen einem Innen- und Außenraum erzielt. Eine solche Scheinundichtheit lässt sich kaum von einer tatsächlichen Undichtheit unterscheiden.

Ein zusätzliches Problem kann entstehen, wenn ein mit Fluid gefüllter Behälter von außen nachträglich über eine Befülleinrichtung oder Öffnung mit dem entsprechenden Fluid befüllt werden soll. In Abhängigkeit von der Lage oder der konstruktiven Auslegung dieser Befülleinrichtung oder Öffnung ist es unvermeidbar, dass während oder nach einem Befüllvorgang eine Restmenge des zugeführten Fluids in den Dichtspalt gelangt. Obwohl die verwendete Dichtung zuverlässig den Bereich vom Behälterinneren zum Behälteräußeren abdichtet, kann aufgrund des vorhandenen Fluids in dem Dichtspalt erneut der Eindruck entstehen, dass ein Leck vorliegt. Eine solche Scheinundichtheit hat zur Folge, dass versucht wird, die Restmengen des Fluids aus dem Dichtspalt zu entfernen. Dies erfolgt meistens durch aufwendige und kostspielige Reinigungsverfahren, bei denen von außen auf den Dichtspalt eingewirkt wird. Ein Beispiel für ein solches Reinigungsverfahren ist eine Reinigung mittels Hochdruckstrahl.

Das Problem der Scheinundichtheit kann ferner auftreten, wenn ein bereits mit Fluid gefüllter Behälter, der miteinander fest verbundene und abgedichtete Bauteile aufweist, aufgrund einer Wartungsmaßnahme demontiert wird. Während einer solchen Demontage gelangen meistens Restmengen des Fluids in eine Dichtungsnut sowie in einen angrenzenden, äußeren Flanschbereich des Behälters. Es ist üblich, dass nach erfolgter Wartung sämtliche wieder zu montierende Bauteile von Restmengen des Fluids manuell gereinigt werden. Während der anschließenden Montage der Bauteile werden diese Bauteile aber mit der Dichtung zusammen eng aneinander gedrückt, so dass Restfluidmengen aus der Dichtungsnut gepresst werden. Trotz einer zuverlässigen Dichtung entsteht erneut das Problem der Scheinundichtheit, so dass aufwändige, aber meist überflüssige Reinigungsverfahren durchgeführt werden.

Es ist eine Aufgabe der Erfindung, einen Fluidbehälter zu schaffen, mit der eine zuverlässige Abdichtung von zu verbindenden Teilen eines Fluidbehälters erreicht wird, wobei während des Betriebes, nach einem Befüllen oder nach einer Montage des Fluidbehälters nicht mehr die oben beschriebene Scheinundichtheit auftritt.

Aus der FR 2 732 741 A1 ist ein Transmissionsriemengehäuse für einen Motorroller bekannt, dessen Gehäuseteile mit einer im Profil etwa L-förmigen Dichtung abgedichtet sind, wobei die Dichtung in an und für sich bekannter Art und Weise einen die Dichtfuge ausfüllenden Dichtschenkel aufweist, der ein etwa U-förmiges Nutprofil besitzt, welches eine Wand des Transmissionsriemengehäuses umgreift. Eine umlaufende Schürze der Dichtung bildet auf der Außenseite des Transmissionsriemengehäuses einen Spritzwasserschutz für die Fuge.

Aus der DE 38 15 511 A1 ist eine gummielastische Abdichtung zwischen zwei lösbaren Gehäuseteilen bekannt, wobei in einem der Gehäuseteile eine als Dichtungsaufnahme vorgesehene Nut angeordnet ist, welche durch jede Seitenwand des Gehäuseteils und einem Schutzkragen gebildet ist. Die Abdichtung umfasst weiterhin eine Profildichtung, die sich lediglich auf der Seitenwand abstützend in die Nut stützkräftefrei eingelegt ist.

Aus der EP 1 288 476 A2 ist ein Gehäusedeckel mit akustisch entkoppeltem Anschlag bekannt. Der Gehäusedeckel umfasst ein elastomeres Dichtungsprofil am Rand des Gehäusedeckels, wobei am Rand des Gehäusedeckels innenseitig eine in Richtung des Motorblocks gerichtete axiale Verlängerung vorgesehen ist, die axial über die Dichtfläche hinausragt, wobei zwischen der axialen Verlängerung und dem Motorblock eine Dichtung angeordnet ist.

Die Aufgaben werden durch die Gegenstände der unabhängigen Patentansprüche gelöst. Vorteilhafte Weiterbildungen der Erfindung sind Gegenstand der Unteransprüche.

Die Dichtung für einen mit Fluid befüllbaren Behälter eines Getriebes oder Motors weist einen ersten Dichtkörper für eine zuverlässige Abdichtung zwischen zu verbindenden Fluidbehälterteilen mit einer ersten, innenliegenden Dichtlippe auf, wobei von dem Dichtkörper ein erster Schenkel nach außen absteht, der im Bereich eines Dichtspaltes zwischen den Fluidbehälterteilen verlaufen kann, an dessen distalem Ende eine zweite, äußere Dichtlippe ausgebildet ist, welche von dem ersten Schenkel absteht und welche eine Abdichtung des äußeren Randes der Behälterteile ermöglicht, so dass von außen kein Fluid in einen Dichtspalt mehr eindringen, sowie zwischen der innenliegenden Dichtlippe und der äußeren Dichtlippe befindliches Medium nach außen dringen kann.

Durch den ersten Dichtkörper wird eine zuverlässige Abdichtung zwischen den zu verbindenden Fluidbehälterteilen erreicht. Ein von dem ersten Dichtkörper abstehender erster Schenkel kann so angeordnet sein, dass er im Bereich eines Dichtspaltes zwischen den Fluidbehälterteilen verläuft. An dem distalen oder äußeren Ende des Schenkels ermöglicht die zweite, äußere Dichtlippe eine Abdichtung des äußeren Randes der Behälterteile, so dass von außen kein Fluid in einen Dichtspalt mehr eindringen kann. Falls Fluid in den Behälter nachgefüllt werden muss und Restmengen in einem Dichtspalt verbleiben, gelangen sie aufgrund der zweiten, äußeren Dichtlippe nicht mehr nach außen, so dass nicht mehr der Eindruck einer Scheinundichtheit entstehen kann. Bei einer Montage von Fluidbehälterteilen können zwar noch Restmengen in einen Dichtspalt gedrückt werden. Sie treten jedoch nicht mehr nach außen, da die zweite, äußere Dichtlippe ein Auslaufen des Fluids verhindert. Durch den von dem Dichtkörper abstehenden ersten Schenkel mit einer davon abstehenden zweiten, äußeren Dichtlippe wird eine Scheinundichtheit zuverlässig verhindert.

Vorzugsweise sind die erste, innenliegende Dichtlippe und die zweite, äußere Dichtlippe in die gleiche Richtung orientiert. Bei einer solchen Ausführungsform bildet sich zwischen den Dichtlippen ein Bereich, der Restmengen an Fluid wie in einem Zwischenspeicher halten kann. Ein dort gespeichertes Fluid tritt somit weder in den Behälterinnenraum hinein noch aus dem Behälter heraus. Von außen kann keine Scheinundichtheit wahrgenommen werden.

Der erste Dichtkörper kann auch als Schenkel ausgebildet sein, so dass die Dichtung im Wesentlichen eine L-Form aufweist. Der Schenkel des Dichtkörpers kann gut in eine Dichtnut eingesetzt werden, so dass eine leichtere Montage der Dichtung in einem Behälterteil möglich ist. Der Schenkel des Dichtkörpers und der davon abstehende erste Schenkel ermöglichen zudem einen relativ großen Bereich, in dem sich Fluid wie in einem Zwischenspeicher ansammeln kann. Die zweite, äußere Dichtlippe verhindert zuverlässig, dass in einem Zwischenspeicher angesammeltes Fluid nach außen gelangen kann.

Gemäß einer weiteren Ausführungsform steht von dem ersten Schenkel ein zweiter Dichtkörper ab, welcher den ersten Dichtkörper und die zweite, äußere Dichtlippe miteinander verbindet. Damit kann Fluid, welches sich zwischen der ersten, innenliegenden Dichtlippe und der zweiten, äußere Dichtlippe als Zwischenspeicher angesammelt hat, daran gehindert werden, entlang des Umfangs des Behälters zu fließen. Sind mehrere derartige zweite Dichtkörper vorgesehen, lassen sich Kammern ausbilden, die von einem ersten Dichtkörper, einem zweiten Dichtkörper und einer zweiten Dichtlippe begrenzt sind.

Wenn der Abstand zwischen der Oberfläche des ersten Schenkels und der Oberkante der zweiten, äußeren Dichtlippe gleich dem Abstand zwischen der Oberfläche des ersten Schenkels und der Oberkante des zweiten Dichtkörpers ist, ist eine Kammer mit gleich hohen Wänden gebildet. Dies ermöglicht eine relativ einfache Montage mit einem Behälterteil und eine gleichmäßige Verformung des Dichtungsmaterials mit einer gleichmäßig zuverlässigen Abdichtung.

Die Aufgabe wird auch durch einen Fluidbehälter für einen Motor oder ein Getriebe gelöst, wobei der Fluidbehälter eine wie vorstehend beschriebene Dichtung, ein Behälterunterteil und ein Behälteroberteil aufweist, und die Dichtung, das Behälterunterteil und das Behälteroberteil entlang einer Trennebene miteinander verbindbar sind, wobei die Dichtung zwischen dem Behälterunterteil und dem Behälteroberteil eingesetzt ist.

Wenn die Dichtung so eingesetzt ist, dass das distale Ende des ersten Schenkels bündig mit dem äußeren Rand des Behälterunterteils oder Behälteroberteils verläuft, kann von außen kein Fluid in den Behälter eindringen und von innen kein Fluid nach außen gelangen. Das Auftreten einer Scheinundichtheit wird somit zuverlässig verhindert.

Gemäß einer Ausführungsform der Erfindung steht der äußere Rand des Behälteroberteils im Bereich der Trennebene gegenüber dem äußeren Rand des Behälterunterteils vor. Dies gilt ebenso für die umgekehrte Variante, bei der der äußere Rand des Behälterunterteils im Bereich der Trennebene gegenüber dem äußeren Rand des Behälteroberteils vorsteht. Damit wird erreicht, dass sich an dem vorstehenden Teil eine Tropfkante ausbilden kann. Somit kann von außen zugeführtes Fluid wieder abtropfen und es besteht eine noch geringere Gefahr, dass Fluid in einen Dichtspalt eindringen könnte.

Nachfolgend wird die Erfindung anhand von in den Zeichnungen dargestellten Ausführungsbeispielen weiter beschrieben. Es zeigen:
- Fig. 1: eine Querschnittsansicht einer ersten Ausführungsform der Dichtung;
- Fig. 2: eine Querschnittsansicht einer zweiten Ausführungsform der Dichtung;
- Fig. 3: eine Querschnittsansicht einer dritten Ausführungsform der Dichtung;
- Fig. 4: eine Querschnittsansicht einer vierten Ausführungsform der Dichtung;
- Fig. 5: eine Querschnittsansicht einer fünften Ausführungsform der Dichtung;
- Fig. 6: eine perspektivische Schnittdarstellung der vierten Ausführungsform der Dichtung;
- Fig. 7: eine Draufsicht von einem Teil der vierten Ausführungsform der Dichtung;
- Fig. 8: eine Seitenschnittdarstellung einer ersten Ausführungsform des erfindungsgemäßen Fluidbehälters;
- Fig. 9: eine Seitenschnittdarstellung einer zweiten Ausführungsform des erfindungsgemä- ßen Fluidbehälters; und
- Fig. 10: eine perspektivische Ansicht einer Ausführungsform der Dichtung.

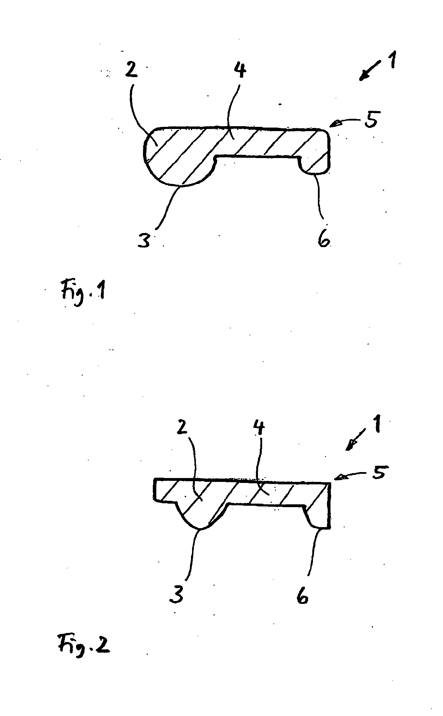

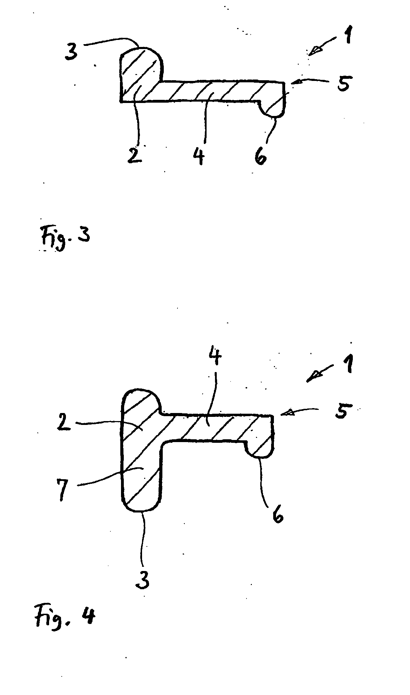

In Fig. 1 ist eine erste Ausführungsform einer Dichtung 1 mit einem ersten Dichtkörper 2 und einer zugehörigen Dichtlippe 3 dargestellt. Von dem Dichtkörper 2 steht ein erster Schenkel 4 seitwärts ab, wobei an dem distalen Ende 5 des ersten Schenkels 4 eine zweite Dichtlippe 6 vorgesehen ist. Der Dichtkörper 2 kann wie bei Fig. 1 in runder Form oder wie bei der in Fig. 2 dargestellten Ausführungsform in eckiger Form als Verlängerung des ersten Schenkels ausgebildet sein. Es ist ferner ebenso möglich, dass die erste, innenliegende Dichtlippe 3 in einer zur zweiten, äußeren Dichtlippe 6 entgegengesetzten Richtung ausgebildet ist, siehe Fig. 3. In diesem Fall kann in einem Behälteroberteil eine Nut für die erste Dichtlippe 3 und in einem Behälterunterteil eine zusätzliche Nut für die zweite Dichtlippe 6 vorgesehen sein.

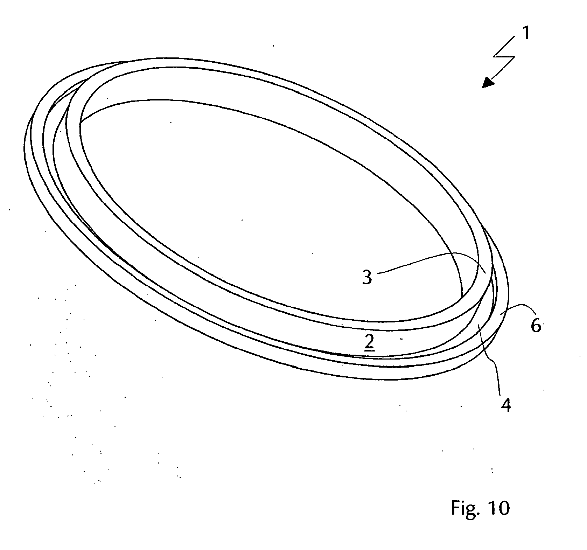

Grundsätzlich kann die Dichtung entlang ihres Umfangsverlauf eine beliebige Form aufweisen, die vorzugsweise an die Kontur des abzudichtenden Fluidbehälters angepasst wird. Figur 10 zeigt ein Ausführungsbeispiel der Dichtung für einen Fluidbehälter, dessen Querschnitt zumindest im abzudichtenden Bereich kreisförmig ist.

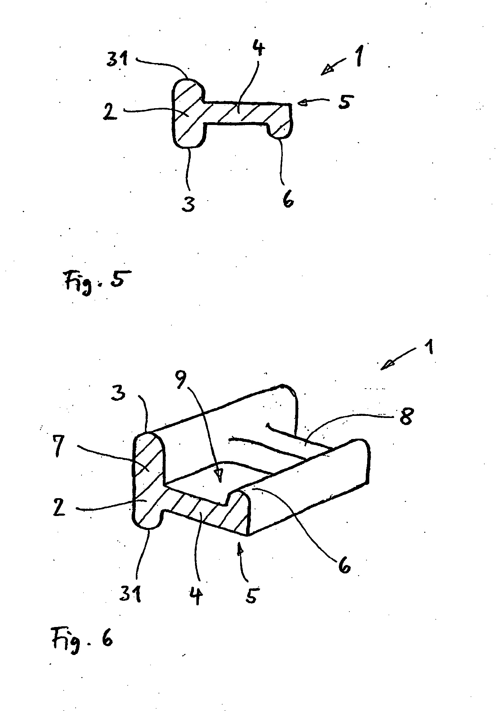

Wie aus Fig. 4 ersichtlich ist, kann der erste Dichtkörper 2 auch als Schenkel 7 ausgebildet sein. Dies ist vorteilhaft, da sich dieser Schenkel 7 einfach in eine Nut einsetzen lässt und nur geringe Gefahr besteht, dass die Dichtung 1 während der Montage verrutscht. Dies gilt auch bei der in Fig. 5 dargestellten Ausführungsform wobei der erste Dichtkörper nicht nur eine erste, innenliegende Dichtlippe 3, sondern auch eine zusätzliche Dichtlippe 31 aufweist, welche einander gegenüberliegen.

Bei umlaufenden Dichtlippen 3 und 6 bildet sich zwischen diesen Dichtlippen ein Bereich 9 aus, in dem eventuell vorhandenes Fluid gesammelt oder gespeichert werden kann, siehe Fig. 6, welche eine perspektivische Ansicht in einer umgedrehten Darstellung der in Fig. 4 abgebildeten vierten Ausführungsform zeigt. Um zu verhindern, dass sich das im Bereich 9 vorhandene Fluid ungehindert seitwärts bewegen kann, lässt sich mit einem zweiten Dichtkörper 8 eine Begrenzung schaffen. Bei zwei im Abstand zueinander angeordneten zweiten Dichtkörpern 8 bildet sich eine Kammer aus, welche eventuell vorhandenes Fluid im Bereich 9 auf eine relativ kleine Zone begrenzt.

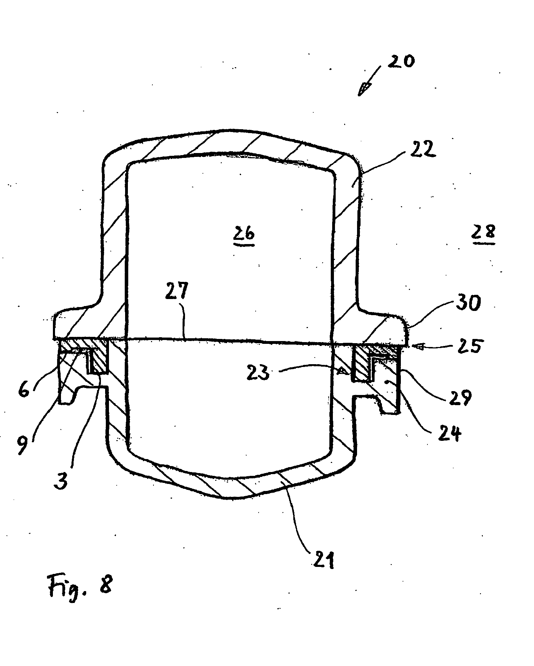

Die Funktion der Dichtung in einem Fluidbehälter ist aus der Fig. 8 besser ersichtlich. Dort ist ein Behälter 20 mit Behälterunterteil 21 und Behälteroberteil 22 sowie einer Dichtung im zwischen beiden Behälterteilen 21, 22 eingebauten Zustand abgebildet. Um eine Scheinundichtheit zu vermeiden, ist bei der Dichtung von Bedeutung, dass am Ende des ersten Schenkels 4 eine zweite, äußere Dichtlippe 6 vorgesehen ist, welche ein Fluid daran hindert, von außerhalb eines Behälters, siehe Bezugszeichen 28, zur ersten, innenliegende Dichtlippe 3 zu gelangen. Dies gilt umgekehrt in gleicher Weise, indem Fluid mittels der zweiten, äußeren Dichtlippe 6 daran gehindert wird, vom Behälterinneren 26 bzw. der Kammer 9 in einen Bereich 28 außerhalb des Behälters zu gelangen.

Wenn gemäß Fig. 8 die erste, innenliegende Dichtlippe 3 in einer Nut 23 eines Fluidbehälters 20 eingesetzt und benachbart zur inneren Seitenwand des Behälterunterteils 21 angeordnet ist, kann die zweite, äußere Dichtlippe 6 am Rand 29 eines Flansches 24 des Behälterunterteiles 21 angeordnet sein. Vom Außenbereich 28 kann aufgrund der zweiten, äußeren Dichtlippe 6 kein Fluid mehr in das Behälterinnere 26 eindringen. Von außen zugeführtes Fluid sammelt sich hingegen bei der in Fig. 8 dargestellten Ausführungsform des Fluidbehälters 20 an einem äußeren Rand 30 und dort besonders an einer Kante 25, wobei es von dort abtropfen kann, so dass es sich nicht mehr im Bereich eines Dichtspaltes befindet. Da der elastisch ausgeführte erste Schenkel 4 der Dichtung von dem ersten Dichtkörper 2 absteht und der erste Schenkel 4 im montierten Zustand eine Abdichtung im Bereich der Trennebene 27 zwischen dem Behälterunterteil 21 und dem Behälteroberteil 22 vornimmt, kann sich in diesem Bereich der Trennebene 27 auch kein Dichtspalt ausbilden.

Werden nach einer Wartung das Behälterunterteil 21, das Behälteroberteil 22 und die Dichtung 1 montiert, indem die Teile zusammengedrückt werden, können sich Fluidreste in der Nut 23 in einer Kammer 9 ansammeln. Die zweite, äußere Dichtlippe 6 verhindert, dass dieses Fluid in den Außenbereich 28 gelangt, so dass der Eindruck einer Scheinundichtheit vermieden wird.

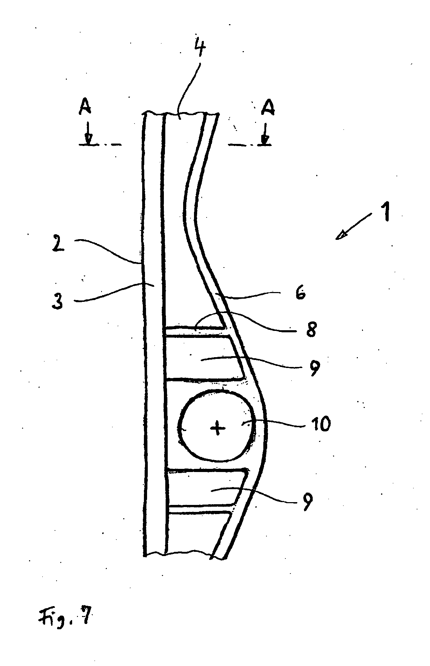

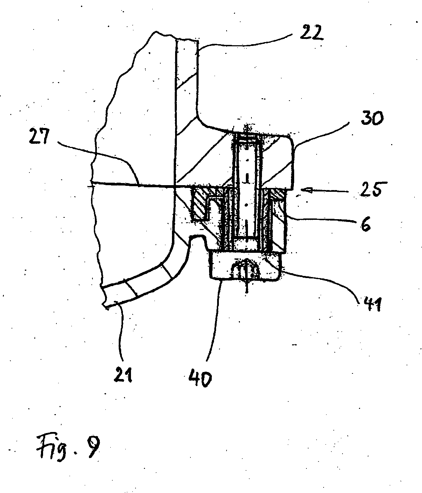

Fig. 7 zeigt eine Draufsicht einer Dichtung 1 gemäß Fig. 4, wobei die Dichtung 1 mehrere Kammern 9 besitzt. Zusätzlich ist noch eine Bohrung 10 zwischen der ersten, innenliegenden Dichtlippe 3 und der zweiten, äußeren Dichtlippe 6 vorgesehen, durch welche zum Beispiel eine Montageschraube 40 mit einer Hülse 41 gesteckt werden können, siehe Fig. 9.

## Patentansprüche

1. Fluidbehälter (20) für einen Motor oder ein Getriebe, wobei der Fluidbehälter (20) eine Dichtung (1), ein Behälterunterteil (21) und ein Behälteroberteil (22) aufweist, wobei das Behälterunterteil (21) und das Behälteroberteil (22) entlang einer Trennebene (27) miteinander verbindbar sind, wobei die Dichtung (1) zwischen dem Behälterunterteil (21) und dem Behälteroberteil (22) eingesetzt ist, die Dichtung (1) einen ersten Dichtkörper (2) für eine Abdichtung zwischen den zu verbindenden Fluidbehälterteilen mit einer ersten, innenliegenden Dichtlippe (3) aufweist, wobei von dem Dichtkörper (2) nach außen ein erster Schenkel (4) absteht, der im Bereich eines Dichtspalts zwischen den Fluidbehälterteilen verläuft, an dessen distalem Ende (5) eine zweite, äußere Dichtlippe (6) ausgebildet ist, welche von dem ersten Schenkel (4) absteht, **dadurch gekennzeichnet, dass** die äußere Dichtlippe (6) eine Abdichtung des äußeren Randes der Behälterteile bewirkt, so dass von außen kein Fluid in einen Dichtspalt mehr eindringt und dass ein zwischen der innenliegenden Dichtlippe (3) und der äußeren Dichtlippe (6) befindliches Medium nicht nach außen dringen kann.

2. Fluidbehälter (20) nach Anspruch 1, **dadurch gekennzeichnet, dass** die Dichtung (1) so eingesetzt ist, dass das distale Ende (5) des ersten Schenkels (4) bündig mit dem äußeren Rand (29) des Behälterunterteils (21) oder Behälteroberteils (22) verläuft.

3. Fluidbehälter (20) nach Anspruch 1 oder 2, **dadurch gekennzeichnet, dass** der äußere Rand (30) des Behälteroberteils im Bereich der Trennebene (27) gegenüber dem äußeren Rand (29) des Behälterunterteils (21) vorsteht oder der äußere Rand (29) des Behälterunterteils (21) im Bereich der Trennebene (27) gegenüber dem äußeren Rand (30) des Behälteroberteils (22) vorsteht.

4. Fluidbehälter (1) nach einem der Ansprüche 1 bis 3, dadurch gekenntzeichnet, dass die erste, innenliegende Dichtlippe (3) und die zweite, äußere Dichtlippe (6) in die gleiche Richtung orientiert sind.

5. Fluidbehälter (1) nach einem der Ansprüche 1 bis 4, **dadurch gekennzeichnet, dass** der erste Dichtkörper (2) als Schenkel (7) ausgebildet ist, der in eine Dichtnut eingesetzt ist, so dass die Dichtung (1) im Wesentlichen eine L-Form aufweist.

6. Fluidbehälter (1) nach einem der Ansprüche 1 bis 5, **dadurch gekennzeichnet, dass** von dem ersten Schenkel (4) ein zweiter Dichtkörper (8) absteht, welcher den ersten Dichtkörper (2) und die zweite, äußere Dichtlippe (6) miteinander verbindet, so dass Fluid, welches sich zwischen der ersten, innenliegenden Dichtlippen (3) und der zweiten, äußeren Dichtlippe (6) als Zwischenspeicher angesammelt hat, daran gehindert werden kann, entlang des Umfangs des Behälters (20) zu fließen.

7. Fluidbehälter (1) nach einem der Ansprüche 1 bis 6, **dadurch gekennzeichnet, dass** der Abstand zwischen der Oberfläche des ersten Schenkels (4) und der Oberkante der zweiten, äußeren Dichtlippe (6) gleich dem Abstand zwischen der Oberfläche des ersten Schenkels (4) und der Oberkante des zweiten Dichtkörpers (8) ist.

## Claims

1. Fluid container (20) for an engine or a transmission, the fluid container (20) having a seal (1), a container bottom part (21) and a container top part (22), it being possible for the container bottom part (21) and the container top part (22) to be connected to one another along a dividing plane (27), the seal (1) being inserted between the container bottom part (21) and the container top part (22), the seal (1) having a first sealing body (2) for a sealing action between the fluid container parts to be connected with a first, inner sealing lip (3), a first limb (4) projecting to the outside from the sealing body (2), which first limb (4) runs in the region of a sealing gap between the fluid container parts, at the distal end (5) of which a second, outer sealing lip (6) is configured which projects from the first limb (4), **characterized in that** the outer sealing lip (6) brings about a sealing action of the outer edge of the container parts, with the result that no more fluid penetrates from the outside into a sealing gap, and that a medium which is situated between the inner sealing lip (3) and the outer sealing lip (6) cannot penetrate to the outside.

2. Fluid container (20) according to Claim 1, **characterized in that** the seal (1) is inserted in such a way that the distal end (5) of the first limb (4) runs flush with the outer edge (29) of the container bottom part (21) or container top part (22).

3. Fluid container (20) according to Claim 1 or 2, **characterized in that** the outer edge (30) of the container top part projects in the region of the dividing plane (27) opposite the outer edge (29) of the container bottom part (21), or the outer edge (29) of the container bottom part (21) projects in the region of the dividing plane (27) opposite the outer edge (30) of the container top part (22).

4. Fluid container (20) according to one of Claims 1 to 3, **characterized in that** the first, inner sealing lip (3) and the second, outer sealing lip (6) are oriented in the same direction.

5. Fluid container (20) according to one of Claims 1 to 4, **characterized in that** the first sealing body (2) is configured as a limb (7) which is inserted into a sealing groove, with the result that the seal (1) has substantially an L-shape.

6. Fluid container (20) according to one of Claims 1 to 5, **characterized in that** a second sealing body (8) projects from the first limb (4), which second sealing body (8) connects the first sealing body (2) and the second, outer sealing lip (6) to one another, with the result that fluid which has collected between the first, inner sealing lip (3) and the second, outer sealing lip (6) as an intermediate store can be prevented from flowing along the circumference of the container (20).

7. Fluid container (20) according to one of Claims 1 to 6, **characterized in that** the spacing between the surface of the first limb (4) and the top edge of the second, outer sealing lip (6) is equal to the spacing between the surface of the first limb (4) and the top edge of the second sealing body (8).

## Revendications

1. Réservoir de fluide (20) pour un moteur ou une boîte de vitesses, dans lequel le réservoir de fluide (20) présente un joint (1), une partie inférieure de réservoir (21) et une partie supérieure de réservoir (22), dans lequel la partie inférieure de réservoir (21) et la partie supérieure de réservoir (22) peuvent être assemblées l'une à l'autre le long d'un plan de séparation (27), dans lequel le joint (1) est inséré entre la partie inférieure de réservoir (21) et la partie supérieure de réservoir (22), le joint (1) présente un premier corps d'étanchéité (2) pour une étanchéité entre les parties de réservoir de fluide à assembler avec une première lèvre d'étanchéité (3) située à l'intérieur, dans lequel une première branche (4) est saillante vers l'extérieur à partir du corps d'étanchéité (2), laquelle s'étend dans la région d'une fente d'étanchéité entre les parties de réservoir de fluide, à l'extrémité distale (5) de laquelle est formée une deuxième lèvre d'étanchéité extérieure (6), qui est saillante à partir de la première branche (4), **caractérisé en ce que** la lèvre d'étanchéité extérieure (6) assure une étanchéité du bord extérieur des parties de réservoir, de telle manière qu'aucun fluide ne pénètre plus de l'extérieur dans une fente d'étanchéité et qu'un fluide se trouvant entre la lèvre d'étanchéité intérieure (3) et la lèvre d'étanchéité extérieure (6) ne puisse pas s'échapper vers l'extérieur.

2. Réservoir de fluide (20) selon la revendication 1, **caractérisé en ce que** le joint (1) est inséré de telle manière que l'extrémité distale (5) de la première branche (4) soit à fleur du bord extérieur (29) de la partie inférieure de réservoir (21) ou de la partie supérieure de réservoir (22).

3. Réservoir de fluide (20) selon la revendication 1 ou 2, **caractérisé en ce que** le bord extérieur (30) de la partie supérieure de réservoir est saillant dans la région du plan de séparation (27) par rapport au bord extérieur (29) de la partie inférieure de réservoir (21) ou le bord extérieur (29) de la partie inférieure de réservoir (21) est saillant dans la région du plan de séparation (27) par rapport au bord extérieur (30) de la partie supérieure de réservoir (22).

4. Réservoir de fluide (20) selon l'une quelconque des revendications 1 à 3, **caractérisé en ce que** la première lèvre d'étanchéité (3) située à l'intérieur et la deuxième lèvre d'étanchéité extérieure (6) sont orientées dans la même direction.

5. Réservoir de fluide (20) selon l'une quelconque des revendications 1 à 4, **caractérisé en ce que** le premier corps d'étanchéité (2) est configuré en une branche (7), qui est insérée dans une rainure d'étanchéité, de telle manière que le joint (1) présente essentiellement une forme de L.

6. Réservoir de fluide (20) selon l'une quelconque des revendications 1 à 5, **caractérisé en ce qu'**un deuxième corps d'étanchéité (8) est saillant à partir de la première branche (4), lequel relie l'un à l'autre le premier corps d'étanchéité (2) et la deuxième lèvre d'étanchéité extérieure (6), de telle manière que du fluide, qui s'est accumulé entre la première lèvre d'étanchéité intérieure (3) et la deuxième lèvre d'étanchéité extérieure (6) comme réservoir intermédiaire, puisse être empêché de s'écouler le long du périmètre du réservoir (20).

7. Réservoir de fluide (20) selon l'une quelconque des revendications 1 à 6, **caractérisé en ce que** la distance entre la surface de la première branche (4) et l'arête supérieure de la deuxième lèvre d'étanchéité extérieure (6) est égale à la distance entre la surface de la première branche (4) et l'arête supérieure du deuxième corps d'étanchéité (8).
